# EUROPÄISCHE PATENTSCHRIFT

(11) **EP 0 562 180 B1**
(45) Veröffentlichungstag und Bekanntmachung des Hinweises auf die Patenterteilung: **02.11.1995**
(21) Anmeldenummer: 92121877.2
(22) Anmeldetag: 23.12.1992
(51) Int. Cl.: B23Q 1/72

(54) **Lünette**
Steady rest
Lunette

(30) Priorität: 21.03.1992 DE 4209241
(43) Veröffentlichungstag der Anmeldung: 29.09.1993
(73) Patentinhaber: SMW-Autoblok Spannsysteme GmbH, 88070 Meckenbeuren (DE)
(72) Erfinder: Folz, Peter, W-7990 Friedrichshafen (DE); Kiefer, Jürgen, W-7990 Friedrichshafen 5 (DE)
(74) Vertreter: Engelhardt, Guido, Dipl.-Ing.

(56) Entgegenhaltungen:
- DE-A- 1 602 740
- DE-A- 3 543 806
- GB-A- 2 089 708
- US-A- 4 546 681
- PATENT ABSTRACTS OF JAPAN vol. 10, no. 365 (M-542)(2422) 6. Dezember 1986
- SOVIET INVENTIONS ILLUSTRATED Section PQ, Week 8648, 11. Dezember 1986 Derwent Publications Ltd., London, GB; Class P, AN 86-317127

## Beschreibung

Die Erfindung bezieht sich auf eine Lünette zum Aufspannen und/oder zur Halterung eines Werkstückes auf einer Drehmaschine mit drei in einem Gehäuse gelagerten und in einer gemeinsamen Ebene verstellbaren Haltegliedern, von denen die beiden äußeren Halteglieder als spiegelbildlich zueinander angeordnete schwenkbar in dem Gehäuse abgestützte Winkelhebel ausgebildet sind und das mittlere Halteglied z.B. durch einen von Druckmittel beaufschlagbaren Betätigungskolben radial in Richtung auf das Werkstück verschiebbar in dem durch einen aufsetzbaren Deckel verschließbaren Gehäuse geführt ist und ein mit Steuerflächen versehenes Mittelstück trägt, das mit den freien Enden der Winkelhebel zusammenwirkt.

Eine Einrichtung dieser Art zum Aufspannen und/oder zur Halterung eines Werkstückes auf Drehmaschinen, die sich in der Praxis außerordentlich gut bewährt hat, ist durch die DE-A 16 02 740 bekannt. Damit die äußeren Halteglieder nicht nur beim Einspannen eines Werkstückes, sondern auch bei der Rückführbewegung des Mittelstückes an dessen Steuerflächen anliegen und die Lünette somit zwangläufig geöffnet wird, ist bei dieser Ausgestaltung vorgesehen, die äußeren Halteglieder über Rückstellfedern mit dem mittleren Halteglied oder dem Mittelstück zu verbinden. Die Rückstellfedern sind hierbei in den Endbereichen der dem Mittelstück zugekehrten Teilen der äußeren Halteglieder befestigt, so daß durch deren Verstellbewegungen zum Einspannen eines Werkstückes die Rückstellfedern gespannt werden. Auch beim Zurückstellen des Mittelstückes liegen somit die an den inneren Enden der äußeren Halteglieder angebrachten Laufrollen durch die Vorspannkraft der Rückstellfedern an den Steuerflächen des Mittelstückes an.

Obwohl auf diese Weise ein Ausschwenken der beiden äußeren Halteglieder gleichzeitig mit der Rückstellung des mittleren Haltegliedes und somit ein selbsttätiges Öffnen der Lünette zu bewerkstelligen ist, sind durch die Rückstellfedern bedingte Betriebsstörungen mitunter nicht auszuschließen. Durch die große Anzahl der Lastwechsel, denen diese Federn ausgesetzt sind, und den hohen Beanspruchungen kann es nämlich vorkommen, daß die Rückstellfedern, insbesondere im Bereich ihrer Einhängeösen, oder Stifte, an denen diese Federn befestigt sind, brechen. Teile der Federn oder der Stifte können sich dann zwischen den trieblich miteinander verbundenen Bauteilen der Lünette verklemmen, Beschädigungen dieser Teile sowie Betriebsstörungen sind die Folge. Auch wird bei einer beschädigten oder nicht mehr voll funktionsfähigen Rückstellfeder die Lünette zur Aufnahme eines Werkstückes nur unzureichend geöffnet.

Zwar ist es des weiteren bekannt, die äußeren Halteglieder jeweils über eine Lasche mit dem Mittelstück zu koppeln und die Rückstellfedern in die in Laschen eingearbeitete Ausnehmungen einzusetzen, ein Bruch der Rückstellfedern ist auf diese Weise zuverlässig nicht zu vermeiden. Außerdem wird durch die an den verstellbaren Bauteilen angelenkten Laschen der Einsatzbereich der Lünette eingeschränkt, da der Verstellweg des mittleren Haltegliedes und der mit diesen über die Laschen verbundenen beiden äußeren Halteglieder begrenzt ist.

Aufgabe der Erfindung ist es daher, die Lünette der eingangs genannten Gattung in der Weise zu verbessern, daß die äußeren Halteglieder auch bei der Rückführung des Mittelstückes stets zwangläufig an dessen Steuerflächen anliegen, ohne daß es dazu Rückstellfedern oder anderer einem Verschleiß unterworfener Bauteile bedarf. Vielmehr soll gewährleistet sein, daß die äußeren Halteglieder jeweils die der Lage des Mittelstückes entsprechende Schwenkstellung einnehmen, die Lünette soll demnach in der einen Endstellung des Mittelstückes immer vollständig geöffnet und ohne Probleme auch zum Einspannen unregelmäßig geformter Werkstücke einzusetzen sein. Der Bauaufwand, durch den dies zu bewerkstelligen ist, soll gering gehalten werden, dennoch soll es nahezu ausgeschlossen sein, daß die da zu notwendigen Bauteile im Betrieb beschädigt werden, so daß auch keine dadurch bedingten Betriebsstörungen in Kauf zu nehmen sind. Eine hohe Zuverlässigkeit und Betriebssicherheit, und zwar auch durch die zwangläufige Rückführung der äußeren Halteglieder, soll demnach gegeben sein. Des weiteren soll die Verstellbarkeit der Halteglieder nicht eingeschränkt werden, außerdem soll zur Vergrößerung der Einlegeöffnung der Lünette gegebenenfalls eines der beiden äußeren Halteglieder zusätzlich ausgeschwenkt werden können.

Gemäß der Erfindung wird dies bei einer Lünette zum Aufspannen und/oder zur Halterung eines Werkstückes auf einer Drehmaschine der vorgenannten Art dadurch erreicht, daß zur zwangläufigen Anlage der beiden äußeren Halteglieder an den Steuerflächen des Mittelstückes beim Öffnen der Lünette die beiden äußeren Halteglieder jeweils mit dem Mittelstück über ein Knotenblech kinematisch verbunden sind, das an einem Ende verschwenkbar am Gehäuse angelenkt ist, etwa im mittleren Bereich eine mit dem Mittelstück zusammenwirkende Steuerkurve aufweist und in dem der Anlenkung gegenüberliegenden Eckbereich gelenkig mit dem zugeordneten äußeren Halteglied verbunden ist.

Nach einer andersartigen Ausgestaltung kann die Aufgabe auch dadurch gelöst werden, daß zur zwangläufigen Anlage der beiden äußeren Halteglieder an den Steuerflächen des Mittelstückes beim Öffnen der Lünette beiderseits des mittleren Haltegliedes jeweils ein Steuerhebel angeordnet ist, der eine mit dem Mittelstück zusammenwirkende Steuerkurve aufweist und mit seinem freien Ende verschwenkbar am Gehäuse angelenkt ist, und daß an dem Steuerhebel ein Zwischenstück verschwenkbar gelagert ist, durch das der Steuerhebel mit dem zugeordneten äußeren Halteglied trieblich verbunden ist.

Zweckmäßig ist es hierbei, die Knotenbleche bzw. die Steuerhebel jeweils in den dem Betätigungskolben benachbarten äußeren Eckbereichen des Gehäuses der Lünette, beispielsweise mittels in dieses eingesetzter Gelenkbolzen, schwenkbar zu lagern, die Knotenbleche bzw. die Steuerhebel über an dem Mittelstück angebrachte von diesem seitlich abstehende und mit deren Steuerkurven zusammenwirkende Zapfen kinematisch mit dem Mittelstück zu verbinden und die Knotenbleche bzw. die Zwischenstücke jeweils über ein in diese eingearbeitetes Langloch und einen an dem zugeordneten äußeren Halteglied angebrachten von diesem abstehenden Zapfen, der in das Langloch eingreift, trieblich mit dem Halteglied zu verbinden.

Die in die Knotenbleche bzw. die Steuerhebel eingearbeiteten Steuerkurven sind durch die unterschiedlichen Schwenkstellungen der äußeren Halteglieder bei Anlage an den Steuerflächen des Mittelstückes, der jeweiligen durch den Verstellweg der an den äußeren Haltegliedern angebrachten Zapfen bedingten Verstellung der Knotenbleche bzw. der Zwischenglieder und dem axialen Verstellweg der an dem Mittelstück angebrachten Zapfen bestimmt.

Zur Vergrößerung der Einlegeöffnung der Lünette kann nach einer Weiterbildung vorgesehen werden, daß eines der äußeren Halteglieder mit seinem an der Steuerfläche des Mittelstückes anliegenden Ende durch das Knotenblech bzw. den Steuerhebel und das Zwischenstück in eine in das mittlere Halteglied in Verlängerung der Steuerfläche des Mittelstückes eingearbeitete Aufnahmetasche zwangläufig einführbar ist.

Dies ist in einfacher Ausgestaltung in der Weise zu bewerkstelligen, daß die Steuerkurve des Knotenbleches bzw. des Steuerhebels mit einer sich an diese anschliessenden Kurvenbahn versehen ist, die sich in Richtung der Anlenkung des Knotenbleches bzw. des Steuerhebels am Gehäuse erstreckt und die derart ausgebildet ist, daß durch die Verstellbewegung des an dem Mittelstück angebrachten Zapfens das Ende des äußeren Haltegliedes mittels des an diesem angebrachten Zapfens in die Aufnahmetasche einschwenkbar ist.

Angebracht ist es hierbei des weiteren, wenn die Aufnahmetasche eine sich an die Steuerfläche des Mittelstückes anschließende in Achsrichtung des mittleren Haltegliedes vorzugsweise unter einem Winkel α von ca. 30° bis 60° geneigt verlaufenden Abweisfläche aufweist.

Vorteilhaft ist es ferner, den in die Knotenbleche bzw. die Steuerhebel eingearbeiteten Steuerkurven jeweils eine parallel zu diesen verlaufenden Gegenfläche zuzuordnen, derart, daß die an dem Mittelstück angebrachten Zapfen zwischen den Steuerkurven und den Gegenflächen geführt sind, und zur Vermeidung der Reibung die an dem Mittelstück angebrachten Zapfen und/oder die an den äußeren Haltegliedern vorgesehenen Zapfen in dem in die Knotenbleche bzw. die Zwischenstücke jeweils ein- greifenden Bereich mit Gleit- oder Wälzlagern zu versehen. Und zum Ausgleich von Fertigungstoleranzen können die Zapfen auch eine exzentrische Anlagefläche aufweisen.

Wird eine Lünette zum Aufspannen und/oder zur Halterung eines Werkstückes auf einer Drehmaschine gemäß der Erfindung ausgebildet, indem die beiden äußeren Halteglieder jeweils mit Hilfe eines verschwenkbar gelagerten und mit einer Steuerkurve versehenen Knotenbleches bzw. eines eine Steuerkurve aufweisenden verschwenkbar gelagerten Steuerhebels und eines an diesem angelenkten Zwischenstückes mit dem Mittelstück verbunden werden, ist stets gewährleistet, daß in jeder Betriebsstellung der Lünette die beiden äußeren Halteglieder an den Steuerflächen des Mittelstückes anliegen. Die äußeren Halteglieder werden somit immer zuverlässig durch die Verstellbewegungen des mittleren Haltegliedes bzw. des mit diesem fest verbundenen Mittelstückes zurückgeführt, auch ist nahezu ausgeschlossen, daß dabei Betriebsstörungen auftreten.

Die Knotenbleche wie auch die Steuerhebel und Zwischenstücke sind in wirtschaftlicher Weise herzustellen, der Bau- und Fertigungsaufwand, der erforderlich ist, um eine zwangläufige Rückführung der äußeren Halteglieder zu ermöglichen, ist demnach gering; dennoch weisen diese Bauteile eine hohe mechanische Festigkeit auf und sind nahezu keinem Verschleiß unterworfen. Des weiteren wird weder durch die Knotenbleche noch durch die Steuerhebel und die Zwischenstücke der Verstellbereich der Lünette, obwohl deren verstellbaren Bauteile trieblich miteinander verbunden sind, eingeschränkt, die vorgegebene Öffnungsweite einer Lünette kann vielmehr immer im vollen Umfang genutzt werden. Und da die äußeren Halteglieder stets mechanisch mit dem mittleren Halteglied gekoppelt sind, wird der Arbeitsablauf, insbesondere beim Einspannen unregelmäßig geformter Werkstücke, da die Nebenzeiten verkürzt werden können, verbessert.

Wird in dem mittleren Halteglied des weiteren eine Aufnahmetasche vorgesehen, in die mit Hilfe des Knotenbleches bzw. des Steuerhebels und des Zwischenstückes das äußere Halteglied mit seinem an der Steuerfläche des Mittelstückes anliegenden Ende eingeschwenkt werden kann, so ist es möglich, die Einlageöffnung der Lünette zu vergrößern, so daß diese auch geneigt angebaut, ein Werkstück aber dennoch vertikal von oben in diese eingelegt werden kann. Der Einsatzbereich der vorschlagsgemäß ausgebildeten Lünette kann dadurch erweitert werden.

In der Zeichnung sind drei Ausführungsbeispiele der gemäß der Erfindung ausgebildeten Lünette zum Aufspannen und/oder zur Halterung eines Werkstückes auf einer Drehmaschine dargestellt, die nachfolgend im einzelnen erläutert sind. Hierbei zeigt, jeweils in Vorderansicht und mit offenem Gehäuse:
- Figur 1: eine mit Knotenblechen zur zwangläufigen Verbindung der äußeren Halteglieder mit dem Mittelstück versehene Lünette in Spannstellung,
- Figur 2: die Lünette nach Figur 1 im geöffneten Zustand,
- Figuren 3 und 4: die Lünette nach den Figuren 1 und 2 mit andersartig ausgebildeten Knotenblechen,
- Figur 5: eine Hälfte der Lünette nach Figur 3 in zwei unterschiedlichen Betriebsstellungen und in einem vergrößerten Maßstab sowie
- Figur 6: eine Hälfte der Lünette nach Figur 1 in einem vergrößerten Maßstab mit einem Steuerhebel und einem Zwischenstück zur zwangläufigen Verbindung eines der äußeren Halteglieder mit dem Mittelstück.

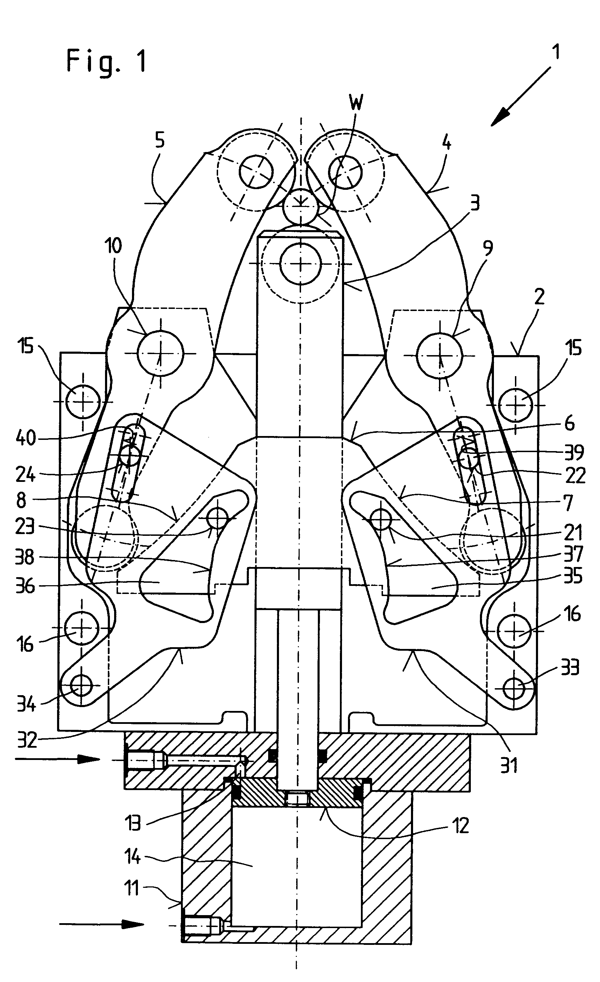

Die in den Figuren 1 bis 6 dargestellte und mit 1, 1' und 1'' bezeichnete Lünette dient zum Aufspannen und/oder zur Halterung eines Werkstückes W auf einer Drehmaschine und besteht jeweils aus drei in einem Gehäuse 2 gelagerten Haltegliedern 3, 4 und 5, die in einer gemeinsamen Ebene verstellbar sind. Die beiden äußeren Halteglieder 4 und 5 sind hierbei als Winkelhebel ausgebildet und auf Gelenkbolzen 9 bzw. 10 schwenkbar in dem Gehäuse 2 gelagert. Das mittlere Halteglied 3 ist dagegen radial in Richtung des Werkstückes W verstellbar geführt. Dazu ist mit dem mittleren Halteglied 3 ein Betätigungskolben 12 verbunden, der in einem an dem Gehäuse 2 angeflanschten Zylinder 11 eingesetzt und durch wechselweise Druckmittelzuführung zu einem der Druckräume 13 oder 14 verstellbar ist. Außerdem trägt das mittlere Halteglied 3 ein mit Steuerflächen 7 bzw. 8 versehenes Mittelstück 6, das mit den freien Enden der beiden äußeren Halteglieder 4 und 5 zusammenwirkt.

Auf das im offenen Zustand abgebildete Gehäuse 2 wird jeweils ein Deckel aufgesetzt; der mittels in in Gewindebohrungen 15 eingreifender Schrauben befestigt wird. Mit Hilfe von die des weiteren in das Gehäuse 2 eingearbeiteten Bohrungen 16 durchgreifender Stehbolzen kann dieses an einer Drehmaschine befestigt werden. Und um zu verhindern, daß z. B. Späne oder andere Verunreinigungen in das Innere des Gehäuses 2 gelangen, sind die Austrittsöffnungen der äußeren Halteglieder 4 und 5 durch Dichtungen 17 abgeschlossen.

Bei den gezeigten Ausführungsbiespielen sind die äußeren Halteglieder 4 und 5 der Lünetten 1, 1' und 1'' jeweils zwangläufig mit dem mittleren Halteglied 3 gekoppelt, und zwar derart, daß die äußeren Halteglieder 4 und 5 mit ihren inneren Enden nicht nur beim Einspannen eines Werkstückes W, sondern auch bei der Rückstellung des mittleren Haltegliedes 3 an den Steuerflächen 7 und 8 des Mittelstückes 6 anliegen. Durch die mechanische Verbindung aller verstellbaren Bauteile der Lünetten 1, 1', 1'' ist somit gewährleistet, daß diese stets zuverlässig zu öffnen ist, ohne daß durch die Koppelung eine Begrenzung der Öffnungsweite in Kauf genommen werden muß.

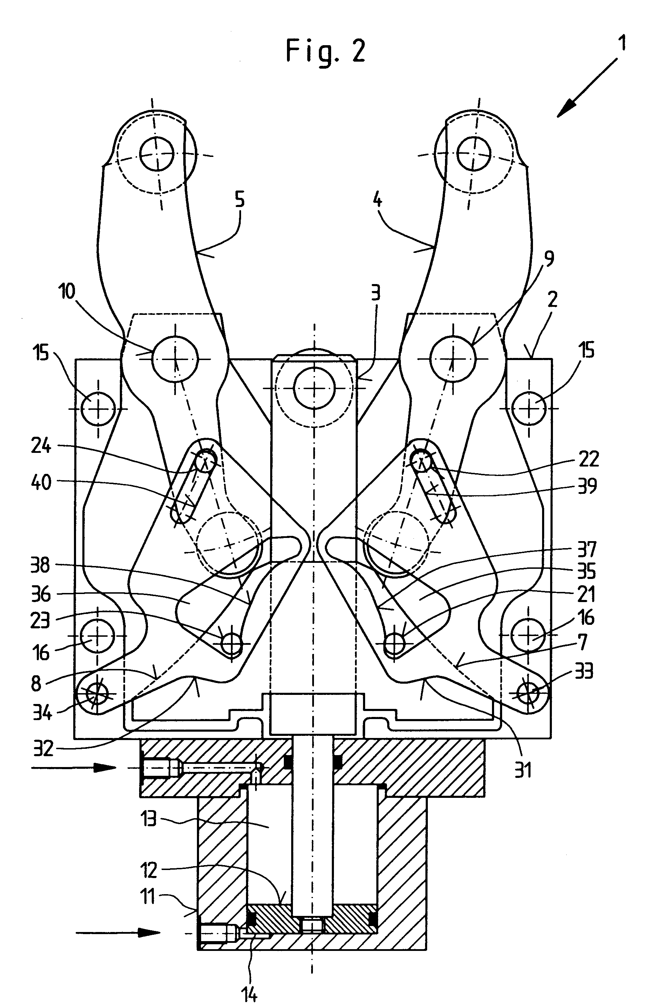

Bei der in den Figuren 1 und 2 gezeigten Lünette 1 wird dies in der Weise bewerkstelligt, daß die beiden äußeren Halteglieder 4 und 5 jeweils über ein Knotenblech 31 bzw. 32 mit dem Mittelstück 6 kinematisch verbunden sind. Die Knotenbleche 31 und 32 sind hierbei mittels Gelenkbolzen 33 bzw. 34 in den dem Betätigungskolben 12 benachbarten Eckbereichen des Gehäuses 2 verschwenkbar gelagert und mit Ausnehmungen 35 bzw. 36 versehen, deren dem mittleren Halteglied 3 benachbarte Flächen als Steuerkurven 37 bzw. 38 ausgebildet sind. In die Ausnehmungen 35, 36 greifen an dem Mittelstück 6 angebrachte, von diesem abstehende Zapfen 21 bzw. 23 ein, die mit den Steuerkurven 37 bzw. 38 zusammenwirken. Des weiteren sind in die Knotenbleche 31, 32 in den den Gelenkbolzen 33, 34 gegenüberliegenden Eckbereichen Langlöcher 39 bzw. 40 eingearbeitet, in die von den äußeren Haltegliedern 4, 5 abstehende Zapfen 22 bzw. 24 eingreifen.

Die Steuerkurven 37, 38 der Knotenbleche 31, 32 sind derart gestaltet, daß die äußeren Halteglieder 4 und 5 auch bei einer Rückführung des mittleren Haltegliedes 6 an den Steuerflächen 7 bzw. 8 zwangläufig anliegen. Die Knotenbleche 31 und 32 werden dabei durch die axiale Verstellbewegung der an dem Mittelstück 6 angebrachten Zapfen 21 bzw. 23 um die Gelenkbolzen 33 bzw. 34 geschwenkt, und durch die in die Langlöcher 39 bzw. 40 eingreifenden Zapfen 22 bzw. 24 werden die äußeren Halteglieder 4 und 5 zwangläufig in der Weise mitgenommen, daß deren Enden auch bei der Rückführung des mittleren Haltegliedes 6 an dessen Steuerflächen 7 bzw. 8 anliegen und die Lünette somit, wie dies in Figur 2 gezeigt ist, in der anderen Endstellung des Mittelstückes 6 vollständig geöffnet ist.

Anstelle der auf die Bewegungsverhältnisse des Mittelstückes 6 und der äußeren Halteglieder 4 und 5 abgestimmten gekrümmten Steuerkurven 37, 38 der Knotenbleche 31, 32 kann, wie dies in Figur 1 in der linken Hälfte strichpunktiert eingezeichent ist, auch eine geradlinig verlaufende Steuerkurve 38' vorgesehen werden. Die Schwenkstellung der äußeren Halteglieder 4 und 5 entspricht bei derartigen Steuerkurven nicht exakt der jeweiligen Lage des Mittelstückes 6.

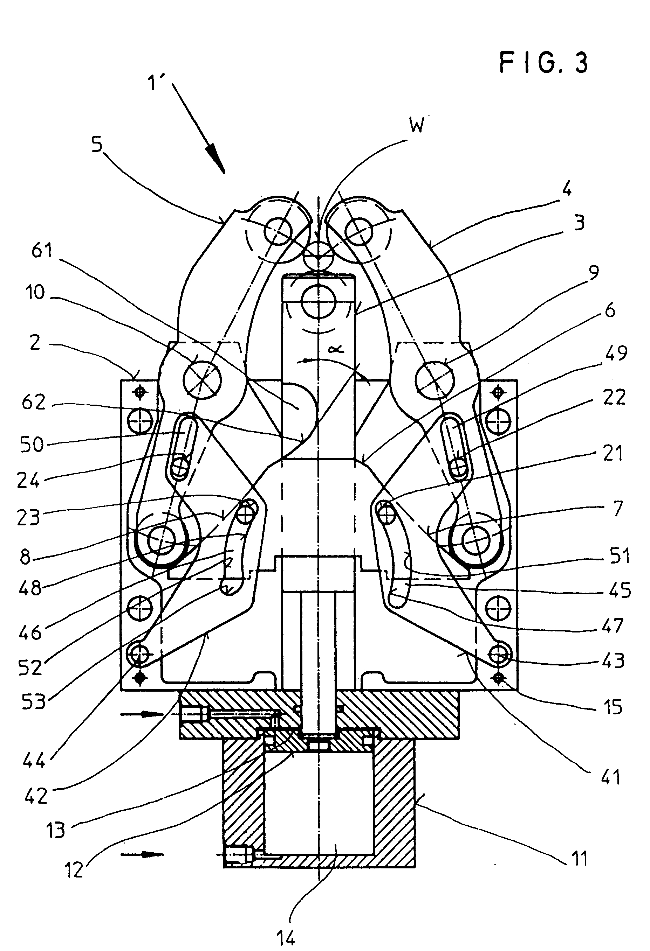

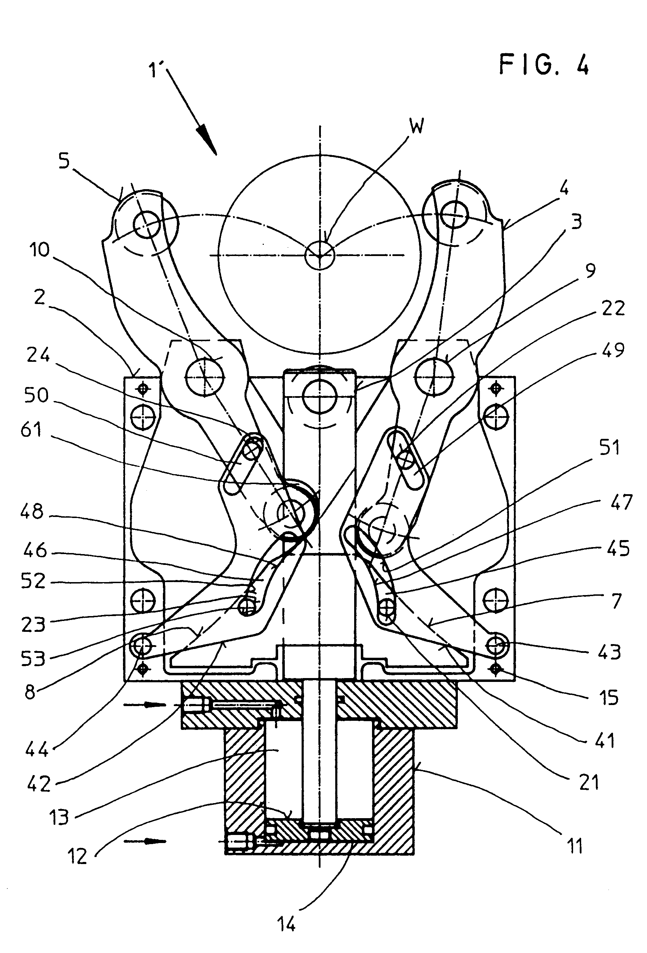

Bei der Lünette 1' nach den Figuren 3 und 4 weisen die mit 41 und 42 bezeichneten Knotenbleche eine andersartige Gestaltung auf. Auch bei dieser Ausführungsform sind die Knotenbleche 41, 42 mittels Gelenkbolzen 43 bzw. 44 verschwenkbar gelagert und mit Ausnehmungen 45 bzw. 46 versehen, in die die an dem Mittelstück 6 angebrachten Zapfen 21 bzw. 23 eingreifen. Die Ausnehmungen 45 und 46 sind hierbei aber derart gestaltet, daß parallel zu den Steuerkurven 47 und 48, durch die die Knotenbleche 41 und 42 bei einer Rückstellbewegung des Mittelstückes 6 durch die Zapfen 21 bzw. 23 nach innen geschwenkt werden, mit Gegenflächen 51 bzw. 52 versehen sind. Die Zapfen 21 und 23 sind demnach in den Ausnehmungen 45 bzw. 46 geführt. Durch die Schwenkbewegungen der Knotenbleche 41 bzw. 42 - zum Öffnen der Lünette 1' nach innen, beim Einspannen des Werkstückes W nach außen - werden die über die Zapfen 22 und 24, die in in die Knotenbleche 41, 42 eingearbeitete Langlöcher 49 bzw. 50 eingreifen, angekoppelten äußeren Halteglieder 4 und 5 mitgenommen und somit entsprechend verstellt.

Bei der Lünette 1' kann deren Einlegeöffnung zusätzlich vergrößert werden. Dazu ist in das mittlere Halteglied 3 im Anschluß an die Steuerfläche 8 eine dem inneren Ende des Haltegliedes 5 zugeordnete Aufnahmetasche 61 eingearbeitet, in die dieses zwangläufig einführbar ist. Dies wird mit Hilfe des Knotenbleches 42 bewerkstelligt, das dazu eine sich an die Steuerkurve 48 anschließende nach außen erstreckende Kurvenbahn 53 aufweist.

Durch einen geringfügigen zusätzlichen Verstellweg des mittleren Haltegliedes 3 wird somit das äußere Halteglied 5 in die Aufnahmetasche 61 eingeschwenkt. Und da die Aufnahmetasche 61 unter einem Winkel α von beispielsweise 35° geneigte Abweisfläche 62 aufweist, wird bei der Zustellbewegung des mittleren Haltegliedes 3 das äußere Halteglied 5 selbsttätig aus der Aufnahmetasche 61 herausgeschwenkt.

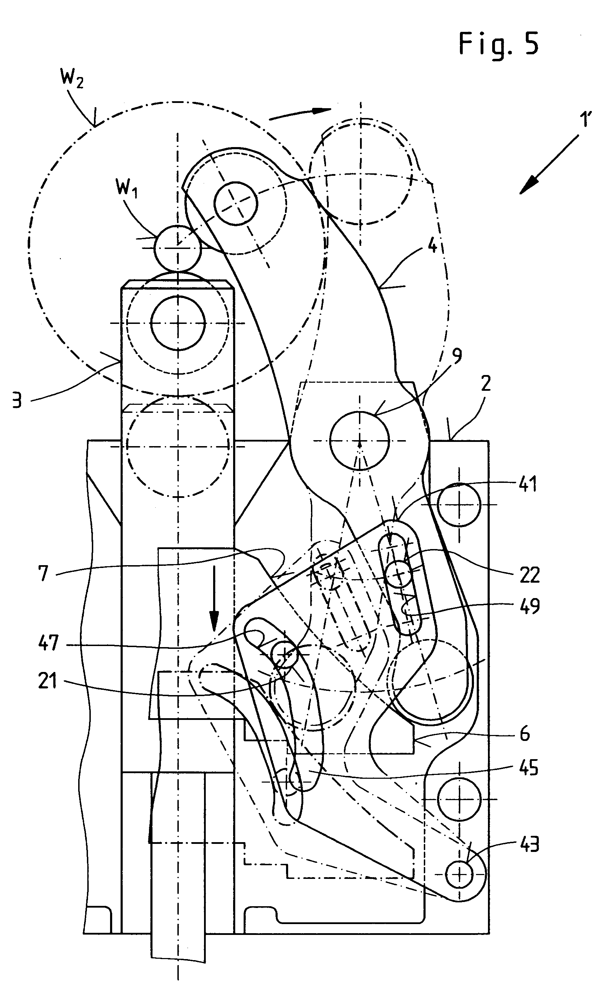

Der Figur 5 ist im einzelnen zu entnehmen, in welcher Weise die in das Knotenblech 41 eingearbeitete Kurvenbahn 47 in Abhängigkeit von Spannstellungen zu bestimmen ist. Bei einer Einspannung des Werkstückes W₁ nehmen das äußere Halteglied 4, der an diesem angebrachte Zapfen 22 sowie der Zapfen 21 des Mittelstückes die jeweils dargestellte Lage ein. Ein Punkt der Kurvenbahn 47 ist dadurch bestimmt. Wird nunmehr ein im Durchmesser andersartiges Werkstück, beispielsweise das im Durchmesser größer bemessene Werkstück W₂, eingespannt, so wird durch die Verstellbewegung des äußeren Haltegliedes 4 das Knotenblech 41 um den Gelenkbolzen 43 in die strichpunktiert eingezeichnete Lage verschwenkt. Durch die diesem Betriebszustand entsprechende Lage des an dem Mittelstück 6 angebrachten Zapfens 21 ist ein weiterer Punkt der Steuerkurve 47 gegeben. Werden diese Verstellbewegungen für eine Vielzahl von im Durchmesser unterschiedlichen Werkstücken simuliert, ist ohne Schwierigkeiten der Verlauf der Kurvenbahn 47 festzulegen. Beim Öffnen der Lünette 1' wird somit das äußere Halteglied 4 durch die Kurvenbahn 47 der jeweiligen Stellung des Mittelstückes 6 entsprechend nach außen verstellt.

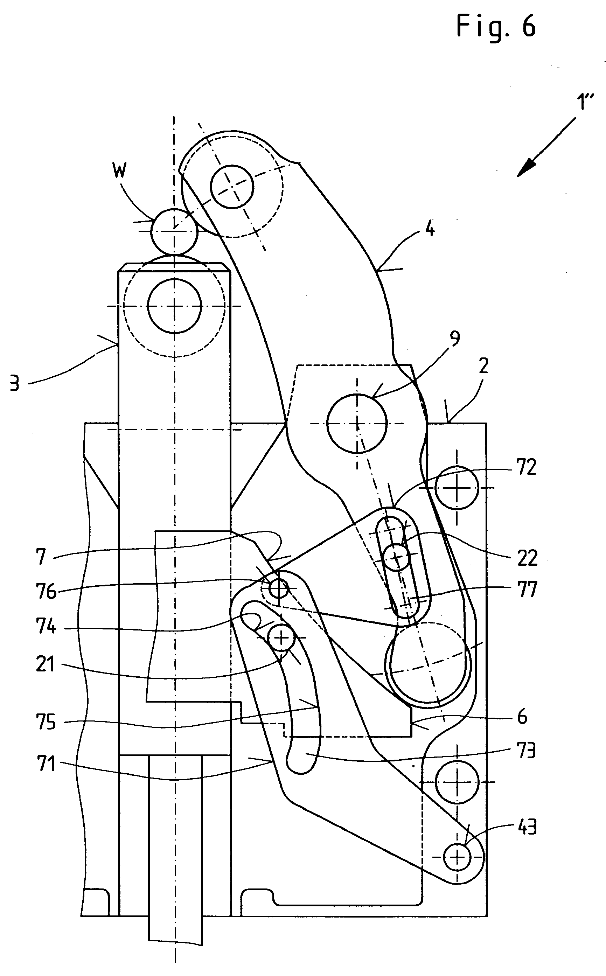

Bei dem in Figur 6 gezeigten Ausführungsbeispiel der Lünette 1'' sind zur kinematischen Verbindung des äußeren Haltegliedes 4 mit dem Mittelstück 6 ein Steuerhebel 71 und ein mit diesem gelenkig verbundenes Zwischenstück 72 vorgesehen. Der Steuerhebel 71 ist mittels des Gelenkbolzens 43 verschwenkbar gelagert und weist eine Ausnehmung 73 auf, deren dem mittleren Halteglied 3 benachbarte Fläche als gekrümmte Steuerkurve 74 ausgebildet ist. Die der Steuerkurve 74 gegenüberliegende Fläche 75 der Ausnehmung 73 dient wiederum zur Führung des Zapfens 21 und verläuft parallel zu der Steuerkurve 74. Das Zwischenstück 72 ist mittels eines Bolzens 76 an dem Steuerhebel 71 angelenkt und mit einem Langloch 77 ausgestattet, in das der an dem äußeren Halteglied 4 angebrachte Zapfen 22 eingreift.

Die Schwenkbewegungen des Steuerhebels 71 und des Zwischenstückes 72 sind wiederum mit Hilfe der Steuerkurve 74 derart aufeinander abgestimmt, daß auch beim Öffnen der Lünette 1'' das äußere Halteglied 4 ständig an der Steuerfläche 7 des Mittelstückes 6 anliegt und die Lünette 1' somit zwangläufig geöffnet wird.

## Patentansprüche

1. Lünette zum Aufspannen und/oder zur Halterung eines Werkstückes auf einer Drehmaschine mit drei in einem Gehäuse gelagerten und in einer gemeinsamen Ebene verstellbaren Haltegliedern, von denen die beiden äußeren Halteglieder als spiegelbildlich zueinander angeordnete schwenkbar in dem Gehäuse abgestützte Winkelhebel ausgebildet sind und das mittlere Halteglied durch einen von Druckmittel beaufschlagbaren Betätigungskolben radial in Richtung auf das Werkstück verschiebbar in dem durch einen aufsetzbaren Deckel verschließbaren Gehäuse geführt ist und ein mit Steuerflächen versehenes Mittelstück trägt, das mit den freien Enden der Winkelhebel zusammenwirkt
**dadurch gekennzeichnet**,
daß zur zwangläufigen Anlage der beiden äußeren Halteglieder (4, 5) an den Steuerflächen (7, 8) des Mittelstückes (6) beim Öffnen der Lünette (1, 1', 1'') die beiden äußeren Halteglieder (4, 5) jeweils mit dem Mittelstück (6) über ein Knotenblech (31, 32; 41, 42) kinematisch verbunden sind, das an einem Ende (33, 34; 43, 44) verschwenkbar am Gehäuse (2) angelenkt ist, etwa im mittleren Bereich eine mit dem Mittelstück (6) zusammenwirkende Steuerkurve (37, 38; 47, 48) aufweist und in dem der Anlenkung gegenüberliegenden Eckbereich gelenkig mit dem zugeordneten äußeren Halteglied (4, 5) verbunden ist.

2. Lünette zum Aufspannen und/oder zur Halterung eines Werkstückes auf einer Drehmaschine mit drei in einem Gehäuse gelagerten und in einer gemeinsamen Ebene verstellbaren Haltegliedern, von denen die beiden äußeren Halteglieder als spiegelbildlich zueinander angeordnete schwenkbar in dem Gehäuse abgestützte Winkelhebel ausgebildet sind und das mittlere Halteglied durch einen von Druckmittel beaufschlagbaren Betätigungskolben radial in Richtung auf das Werkstück verschiebbar in dem durch einen aufsetzbaren Deckel verschließbaren Gehäuse geführt ist und ein mit Steuerflächen versehenes Mittelstück trägt, das mit den freien Enden der Winkelhebel zusammenwirkt,
**dadurch gekennzeichnet**,
daß zur zwangläufigen Anlage der beiden äußeren Haltegliedern (4, 5) an den Steuerflächen (7, 8) des Mittelstückes (6) beim Öffnen der Lünette (1, 1', 1'') beiderseits des mittleren Haltegliedes (3) jeweils ein Steuerhebel (71) angeordnet ist, der eine mit dem Mittelstück (6) zusammenwirkende Steuerkurve (74) aufweist und mit seinem freien Ende verschwenkbar am Gehäuse (2) angelenkt ist, und daß an dem Steuerhebel (71) ein Zwischenstück (72) verschwenkbar gelagert ist, durch das der Steuerhebel (71) mit dem zugeordneten äußeren Halteglied (4) trieblich verbunden ist.

3. Lünette nach Anspruch 1 oder 2,
**dadurch gekennzeichnet,**
daß die Knotenbleche (31, 32; 41, 42) bzw. die Steuerhebel (71) jeweils in den dem Betätigungskolben (12) benachbarten äußeren Eckbereichen des Gehäuses (2) der Lünette (1, 1', 1''), beispielsweise mittels in dieses eingesetzter Gelenkbolzen (33, 34; 43, 44), schwenkbar gelagert sind.

4. Lünette nach einem oder mehreren der
Ansprüche 1 bis 3,
**dadurch gekennzeichnet**,
daß die Knotenbleche (31, 32; 41, 42) bzw. die Steuerhebel (71) über an dem Mittelstück (6) angebrachten, von diesem abstehenden und mit den Steuerkurven (37, 38; 47, 48; 74) zusammenwirkenden Zapfen (21; 23) kinematisch mit dem Mittelstück (6) verbunden sind.

5. Lünette nach einem oder mehreren der
Ansprüche 1 bis 4,
**dadurch gekennzeichnet**,
daß die Knotenbleche (31, 32; 41, 42) bzw. die Zwischenstücke (72) jeweils über ein in diese eingearbeitetes Langloch (39, 40; 49, 50; 77) und einen an dem zugeordneten äußeren Halteglied (4, 5) angebrachten von diesem abstehenden Zapfen (22; 24), der in das Langloch (39, 40; 49, 50; 77) eingreift, trieblich mit den Haltegliedern (4, 5) verbunden sind.

6. Lünette nach einem oder mehreren der
Ansprüche 1 bis 5,
**dadurch gekennzeichnet,**
daß die in die Knotenbleche (31, 32; 41, 42) bzw. die Steuerhebel (71) eingearbeiteten Steuerkurven (37, 38; 47, 48; 74) durch die unterschiedlichen Schwenkstellungen der äußeren Halteglieder (4, 5) bei deren Anlage an den Steuerflächen (7, 8) des Mittelstückes (6), der jeweiligen durch den Verstellweg der an den äußeren Haltegliedern (4, 5) angebrachten Zapfen (22, 24) bedingten Verstellung der Knotenbleche (31, 32; 41, 42) bzw. der Zwischenglieder (72) und dem axialen Verstellweg der an dem Mittelstück (6) angebrachten Zapfen (21, 23) bestimmt ist.

7. Lünette nach einem oder mehreren der
Ansprüche 1 bis 6,
**dadurch gekennzeichnet**,
daß zur Vergrößerung der Einlegeöffnung der Lünette (1') eines der äußeren Halteglieder (5) mit seinem an der Steuerfläche (8) des Mittelstückes (6) anliegenden Ende durch das Knotenblech (41) bzw. den Steuerhebel und das Zwischenstück in eine in das mittlere Halteglied (3) in Verlängerung der Steuerfläche (8) des Mittelstückes (6) eingearbeitete Aufnahmetasche (61) zwangläufig einführbar ist.

8. Lünette nach einem oder mehreren der
Ansprüche 1 bis 7,
**dadurch gekennzeichnet,**
daß zur Einführung des Haltegliedes (5) in die Aufnahmetasche (61) die Steuerkurve (48) des Knotenbleches (42) bzw. des Steuerhebels mit einer sich an diese anschließenden Kurvenbahn (53) versehen ist, die sich in Richtung der Anlenkung (44) des Knotenbleches (42) bzw. des Steuerhebels am Gehäuse (2) erstreckt und die derart ausgebilet ist, daß durch die Verstellbewegung des an dem Mittelstück (6) angebrachten Zapfens (23) das Ende des äußeren Haltegliedes (5) mittels des an diesem angebrachten Zapfens (24) in die Aufnahmetasche (61) einschwenkbar ist.

9. Lünette nach Anspruch 7 oder 8,
**dadurch gekennzeichnet**,
daß die Aufnahmetasche (61) eine sich an die Steuerfläche (8) des Mittelstückes (6) anschließende in Achsrichtung des mittleren Haltegliedes (3) vorzugsweise unter einem Winkel α von 30° bis 60° geneigt verlaufenden Abweisfläche (62) aufweist.

10. Lünette nach einem oder mehreren der
Ansprüche 1 bis 9,
**dadurch gekennzeichnet**,
daß den in die Knotenbleche (41, 42) bzw. die Steuerhebel eingearbeiteten Steuerkurven (47, 48) jeweils eine parallel zu diesen verlaufende Gegenfläche (51, 52) zugeordnet ist, derart, daß die an dem Mittelstück (6) angebrachten Zapfen (21, 23) zwischen den Steuerkurven (47, 48) und den Gegenflächen (51, 52) geführt sind.

11. Lünette nach einem oder mehreren der
Ansprüche 1 bis 10
**dadurch gekennzeichnet**,
daß die an dem Mittelstück (6) angebrachten Zapfen (21, 23) und/oder die an den äußeren Haltegliedern (4, 5) vorgesehenen Zapfen (22, 24) in dem in die Knotenbleche (31, 32; 41, 42) bzw. die Zwischenstücke (72) jeweils eingreifenden Bereich mit Gleit- oder Wälzlagern versehen sind.

12. Lünette nach einem oder mehreren der
Ansprüche 1 bis 11,
**dadurch gekennzeichnet,**
daß die Zapfen (22, 24) zum Ausgleich von Fertigungstoleranzen eine exzentrische Anlagefläche aufweisen.

## Claims

1. Steady rest for clamping and/or holding a workpiece on a turning machine with three holding elements mounted within a housing, whereby the three holding elements can be moved in a common plane, and the two outer holding elements are formed as angled levers positioned in a mirror-image arrangement which can be swivelled and are mounted within the housing, whereby the middle holding element is radially guided by an actuation piston which can be actuated by a pressurised medium, moved towards the workpiece and is mounted in a housing which can be closed by means of a cover which can be placed on top, and whereby the middle holding element carries a central piece which has control surfaces and whose free ends interact with the angled levers,
**characterized in that**,
in order to ensure the two outer holding elements (4, 5) contact the control surfaces (7, 8) of the central piece (6) when the steady rest (1, 1', 1'') opens, each of the two outer holding elements (4, 5) are joined to the central piece (6) in a kinematic connection by means of a junction plate (31, 32; 41, 42), one end (33, 34; 43, 44) of which is positioned against the housing (2) in a swiveling arrangement, having a control curve (37, 38; 47, 48) in the central area which interacts with the central piece (6) and the corner area opposite the swivelling joint is connected to the corresponding outer holding element (4, 5) in an articulated arrangement.

2. Steady rest for clamping and/or holding a workpiece on a turning machine with three holding elements mounted within a housing, whereby the three holding elements can be moved in a common plane, and the two outer holding elements are formed as angled levers positioned in a mirror-image arrangement which can be swivelled and are mounted within the housing, whereby the middle holding element is radially guided by an actuation piston which can be actuated by a pressurised medium, moved towards the workpiece and is mounted in a housing which can be closed by means of a cover which can be placed on top, and whereby the middle holding element carries a central piece which has control surfaces and whose free ends interact with the angled levers,
**characterized in that**,
in order to ensure the two outer holding elements (4, 5) contact the control surfaces (7, 8) of the central piece (6) when the steady rest (1, 1', 1'') opens, a control lever (71) is arranged on either side of the central holding element (3), whereby the control lever (71) has a control curve (74) which interacts with the central piece (6) and is joined to the housing (2) in a swiveling connection at its free end, and that an adapter (72) is mounted in a swivelling arrangement on the control lever (71), by means of which the control lever (71) is placed in a driving connection with the corresponding outer holding element (4).

3. Steady rest in accordance with claims 1 or 2,
**characterized in that**,
the junction plates (31, 32; 41, 42) or the control levers (71) are all mounted in a swivelling arrangement in the outer corner areas of the housing (2) of the steady rest (1, 1', 1'') which are adjacent to the actuation piston (12), whereby the arrangement may, for example, take the form of a joint formed by an articulated pin (33, 34; 43, 44) inserted in the housing (2).

4. Steady rest in accordance with one or more of claims 1 to 3,
**characterized in that**,
the junction plates (31, 32; 41, 42) or the control levers (71) are joined to the central piece in a kinematic connection by means of pivots (21; 23) attached to and protruding from the central piece (6) which interact with the control curves (37, 38; 47, 48; 74).

5. Steady rest in accordance with one or more of claims 1 to 4,
**characterized in that**,
the junction plates (31, 32; 41, 42) or the adapters (72) are each joined to the holding elements (4, 5) in a driven connection by means of a slot (39, 40; 49, 50; 77) formed in the junction plates (31, 32; 41, 42) or the adapters (72) and by a pivot (22; 24) attached to and protruding from the corresponding outer holding element (4, 5) which engages in the slot (39, 40; 49, 50; 77).

6. Steady rest in accordance with one or more of claims 1 to 5,
**characterized in that**,
the control curves (37, 38; 47, 48; 74) formed in the junction plates (31, 32; 41, 42) or the control levers (71) are determined by the various swiveling positions of the outer holding elements (4, 5) when they are in contact with the control surfaces (7, 8) of the central piece (6), by the corresponding movement of the junction plates (31, 32; 41, 42) or adapters (72) which is due to the displacement of the pivots (22, 24) attached to the outer holding elements (4, 5) and by the axial displacement of the pivots (21, 23) which are attached to the central piece (6).

7. Steady rest in accordance with one or more of claims 1 to 6,
**characterized in that**,
in order to increase the insertion aperture of the steady rest (1'), the end of one of the outer holding elements (5) which contacts the control surface (8) of the central piece (6) can be forced to pass through the junction plate (41) or the control lever and the adapter into a pocket (61) formed into the middle holding element (3) as an extension of the control surface (8) of the central piece (6).

8. Steady rest in accordance with one or more of claims 1 to 7,
**characterized in that**,
in order to insert the holding element (5) into the pocket (61), the control curve (48) of the junction plate (42) or the control lever has a curved track (53) continuing from it and extending in the direction of the joint (44) between the junction plate (42) or the control lever and the housing (2), whereby the aforementioned curved track (53) is shaped so that the displacement of the pivot (23) fitted on the central piece (6) allows the end of the outer holding element (5) to be swung inwards into the pocket (61) by means of the pivot (24) fitted on the holding element (5).

9. Steady rest in accordance with claim 7 or 8,
**characterized in that**,
the pocket (61) has a sloping surface (62) adjacent to the control surface (8) of the central piece (6) which runs in parallel to the axis of the central holding element (3), and in a preferred embodiment, runs at an angle α of between 30° and 60°.

10. Steady rest in accordance with one or more of claims 1 to 9,
**characterized in that**,
one counter surface (51, 52) runs in parallel to each control curve (47, 48) formed in the junction plates (41, 42) or control levers, and the counter surfaces (51, 52) are allocated in such a way that the pivots (21, 23) attached to the central piece (6) are guided between the control curves (47, 48) and the counter surfaces (51, 52).

11. Steady rest in accordance with one or more of claims 1 to 10,
**characterized in that**,
the pivots (21, 23) attached to the central piece (6) and/or the pivots (22, 24) on the outer holding elements (4, 5) are fitted with plain or roller bearings in each zone where they engage in the junction plates (31, 32; 41, 42) or the adapters (72).

12. Steady rest in accordance with one or more of claims 1 to 11,
**characterized in that**,
the pivots (22, 24) have an eccentric contact surface in order to compensate for production tolerances.

## Revendications

1. Lunette pour le serrage et/ou pour le support sur un tour d'une pièce à usiner, avec trois éléments de retient logés dans un carter et réglables dans un plan commun, dont les deux éléments extérieurs sont conçus sous forme de leviers angulaires disposés en sens réfléchi l'un par rapport à l'autre et appuyés pivotant dans le carter, et dont l'élément central disposé dans le carter obturé par un couvercle, se laisse déplacer radialement en direction de la pièce à usiner au moyen d'un piston d'actionnement soumis à un agent sous pression, et porte la pièce centrale munie de faces de commande et collaborant avec les extrémités libres des leviers angulaires.
caractérisée en ce que
pour l'appui forcé des deux éléments de retient extérieurs (4, 5) sur les faces de commande (7, 8) de la pièce centrale (6) à l'ouverture de la lunette (1, 1', 1''), les deux éléments de retient extérieurs (4, 5) respectifs possèdent une liaison ci-nématique avec la pièce centrale (6), au moyen d'une tôle à noeuds (31, 32; 41, 42) dont une extrémité (33, 34; 43, 44) pivote sur le carter (2) et porte vers son centre une courbe de commande (37, 38; 47, 48) collaborant avec la pièce centrale (6) et qui, vers l'angle opposé au pivot, est lié pivotant avec l'élément de retient extérieur correspondant (4, 5).

2. Lunette pour le serrage et/ou pour le support sur un tour d'une pièce à usiner, avec trois éléments de retient logés dans un carter et réglables dans un plan commun, dont les deux éléments extérieurs sont conçus sous forme de leviers angulaires disposés en sens réfléchi l'un par rapport à l'autre et appuyés pivotant dans le carter et dont l'élément central disposé dans le carter obturé par un couvercle qui, se laisse déplacer radialement en direction de la pièce à usiner au moyen d'un piston d'actionnement soumis à un agent sous pression, et porte la pièce centrale munie de faces de commande et collaborant avec les extrémités libres des leviers angulaires.
caractérisée en ce que
pour l'appui forcé des deux éléments de retient extérieurs (4, 5) sur les faces de commande (7, 8) de la pièce centrale (6) à l'ouverture de la lunette (1, 1', 1''), il soit disposé de part et d'autre de l'élément de retient central (3), un levier de commande (71) portant une courbe de commande (74) collaborant avec la pièce centrale (6) et dont l'extrémité libre pivote sur le carter (2), et que, sur le levier de commande (71), il soit logé pivotant un élément intermédiaire (72) qui assure la liaison d'entraînement entre le levier de commande (71) et l'élément de retient extérieur (4) correspondant.

3. Lunette d'après la revendication 1 ou 2,
caractérisée en ce que
les tôles à noeuds (31, 32; 41, 42) ou les leviers de commande (71) pivotent respectivement aux angles extérieurs du carter (2) de la lunette (1, 1', 1'') avoisinant le piston d'actionnement (12), et ceci au moyen de boulons articulés (33, 34; 43, 44) qui y sont insérés.

4. Lunette d'après une ou plusieurs des revendications 1 à 3,
caractérisée en ce que
les tôles à noeuds (31, 32; 41, 42) ou les leviers de commande possèdent une liaison cinématique avec la pièce centrale (6) au moyen de tétons (21; 23) prévus sur la pièce centrale (6), saillant de celle-ci et collaborant avec les courbes de commande (38; 47, 48; 74).

5. Lunette d'après une ou plusieurs des revendications 1 à 4,
caractérisée en ce que
les tôles à noeuds (31, 32; 41, 42) ou les éléments intermédiaires (72) ont une liaison d'entraînement avec les éléments de retient (4, 5) ou moyen de trous oblongs (39, 40; 49, 50; 77) qui y sont pratiqués, et d'un téton (22, 24) prévu sur l'élément de retient extérieur correspondant (4, 5) et saillant de celui-ci.

6. Lunette d'après une ou plusieurs des revendications 1 à 5,
caractérisée en ce que
les courbes de commande (37, 38; 47, 48; 74) pratiquées dans les tôles à noeuds (31, 32; 41, 42) ou dans les leviers de commande (71) sont définies par les différentes positions de pivotement des éléments de retient extérieurs (4, 5) lorsqu'ils portent sur les faces de commande (7, 8) de la pièce centrale (6), par le déplacement respectif des tôles à noeuds (31, 32; 41, 42) ou des éléments intermédiaires (72) déterminé par la course de réglage des tétons (22, 24) respectifs sur les éléments de retient extérieurs (4, 5) et par la course de réglage axiale des tétons (21, 23) disposés sur la pièce centrale (6).

7. Lunette d'après une ou plusieurs des revendications 1 à 6,
caractérisée en ce que
pour l'agrandissement de l'ouverture de logement de la lunette (1'), l'extrémité d'un des éléments de retient extérieurs (5), portant sur la face de commande (8) de la pièce centrale (6), se laisse insérer à travers la tôle à noeuds (41) ou le levier de commande et l'élément intermédiaire, dans une pochette de logement (61) pratiquée dans le sens prolongé de la face de commande (8) de la pièce centrale (6), dans l'élément de retient (3)

8. Lunette d'après une ou plusieurs des revendications 1 à 7,
caractérisée en ce que
pour l'introduction de l'élément de retient (5) dans la pochette de logement (61), la courbe de commande (48) de la tôle à noeuds (42) ou du levier de commande est munie d'une piste courbée (53) suivante, s'étendant en direction du pivot (44) de la tôle à noeuds (42) ou du levier de commande sur le carter (2), et qui est formée de sorte à ce que par le mouvement de déplacement du téton (23) prévu sur la pièce centrale (6), le téton (24) prévu à l'extrémité de l'élément de retient extérieur (5) se laisse pivoter dans la pochette de logement (61).

9. Lunette d'après les revendications 7 ou 8,
caractérisée en ce que
la pochette de logemnent (61) porte une face de rebut (62) suivant la face de commande (8) de la pièce centrale (6) et inclinée, de préférence sous un angle α d'entre 30 et 60°, en direction axiale de l'élément de retient central (3),

10. Lunette d'après une ou plusieurs des revendications 1 à 9,
caractérisée en ce que
aux courbes de commande (47, 48) pratiquées dans les tôles à noeuds (41, 42) ou dans les leviers de commande, il est assigné respectivement une face opposée parallèle (51, 52) de sorte que les tétons (21, 23) prévus sur la pièce centrale (6) soient guidés entre les courbes de commande (47, 48) et les faces opposées (51, 52).

11. Lunette d'après une ou plusieurs des revendications 1 à 10,
caractérisée en ce que
l'endroit des tétons (21, 23) prévus sur la pièce centrale (6) et/ou des tétons (22, 24) prévus sur les éléments de retient extérieurs (4, 5), s'engrenant respectivement dans les tôles à noeuds (31, 32; 41, 42) ou dans les éléments intermédiaires (72), est muni de paliers lisses ou de paliers à roulements.

12. Lunette d'après une ou plusieurs des revendications 1 à 11,
caractérisée en ce que,
pour compenser des tolérances de fabrication, les tétons (22, 24) sont munis d'une face de butée excentrique.
